# EUROPÄISCHE PATENTSCHRIFT

(11) **EP 4 139 165 B1**
(45) Veröffentlichungstag und Bekanntmachung des Hinweises auf die Patenterteilung: **02.08.2023**
(21) Anmeldenummer: 21721019.4
(22) Anmeldetag: 20.04.2021
(51) Int. Cl.: B60N 2/818, B60N 2/815, B60N 2/894

(54) **KOPFSTÜTZE FÜR EINEN SITZ, SOWIE SITZ, INSBESONDERE FAHRZEUGSITZ**
HEADREST FOR A SEAT, AND SEAT, IN PARTICULAR A VEHICLE SEAT
APPUI-TÊTE POUR UN SIÈGE, ET SIÈGE, EN PARTICULIER SIÈGE DE VÉHICULE

(30) Priorität: 23.04.2020 DE 102020205185; 05.08.2020 DE 102020120639
(43) Veröffentlichungstag der Anmeldung: 01.03.2023
(73) Patentinhaber: Adient US LLC, Plymouth, MI 48170 (US)
(72) Erfinder: MARTINKA, Michal, 91501 Nove Mesto nad Vahom (SK); REZBARIK, Miroslav, 91101 Trencin (SK); MORINIERE, Christophe, 67810 Holtzheim (FR)
(74) Vertreter: Liedhegener, Ralf
(86) Internationale Anmeldenummer: PCT/EP2021/060165
(87) Internationale Veröffentlichungsnummer: WO 2021/214017

(56) Entgegenhaltungen:
- DE-A1-102010 030 783
- FR-A1- 2 987 792
- FR-A1- 3 069 499

## Beschreibung

Die Erfindung betrifft eine Kopfstütze für einen Sitz, insbesondere Fahrzeugsitz, umfassend zumindest einen Kopfstützenkörper, ein Tragelement mit zumindest einem Stangenende zur Halterung des Kopfstützenkörpers, ein Grundtragelement mit zumindest einer Lageröffnung durch welche das Stangenende hindurchgeführt ist, wobei das Grundtragelement mit dem Kopfstützenkörper verbunden ist und mit diesem relativ zum Tragelement höhenverstellbar ist, und ein Verriegelungselement zur Verriegelung des Grundtragelements in einer eingestellten Höhenposition an dem Tragelement, wobei das Verriegelungselement zumindest einen Verriegelungsbereich und einen Betätigungsbereich aufweist. Die Erfindung betrifft zudem einen Fahrzeugsitz.

### Stand der Technik

Aus dem Stand der Technik sind verschiedene höhenverstellbare Kopfstützen, welche relativ zu einer Rückenlehne eines Sitzes höhenverstellbar sind, bekannt.

Die US 2011/0006578 A1 und die US 7,562,936 B1 offenbaren jeweils eine Kopfstütze für einen Sitz, insbesondere einen Fahrzeugsitz, umfassend zumindest einen Kopfstützenkörper, ein Tragelement mit zumindest einem Stangenende zur Halterung des Kopfstützenkörpers, ein Grundtragelement mit zumindest einer Lageröffnung durch welche das Stangenende hindurchgeführt ist, wobei das Grundtragelement mit dem Kopfstützenkörper verbunden ist und mit diesem relativ zum Tragelement höhenverstellbar ist, und ein Verriegelungselement zur Verriegelung des Grundtragelements in einer eingestellten Höhenposition an dem Tragelement, wobei das Verriegelungselement zumindest einen Verriegelungsbereich und einen Betätigungsbereich aufweist.

Die EP 3 153 347 A1 offenbart eine Kopfstütze, umfassend ein Kopfstützengehäuse, eine U-förmige Kopfstützenstange, die eine Querstange und zwei vertikale Stützstangen umfasst, ein Grundtragelement, das zwei Gleithülsen umfasst, wobei die zwei vertikalen Stützstangen der Kopfstützenstange jeweils durch zwei Gleithülsen hindurchgeführt sind, wobei die Gleithülsen an den vertikalen Stützstangen in einer vertikalen Richtung gleitbar sind.

Die FR 3 069 499 A1 offenbart eine Kopfstütze für einen Fahrzeugsitz, umfassend einen Kopfstützenkörper, ein Tragelement mit zumindest einem Stangenende zur Halterung des Kopfstützenkörpers, ein Grundtragelement mit zumindest einer Lageröffnung, durch welche das Stangenende hindurchgeführt ist, wobei das Grundtragelement mit dem Kopfstützenkörper verbunden ist und mit diesem relativ zum Tragelement höhenverstellbar ist, und ein Verriegelungselement zur Verriegelung des Grundtragelements in einer eingestellten Höhenposition an dem Tragelement, wobei das Verriegelungselement zumindest einen Verriegelungsbereich und einen Betätigungsbereich aufweist. Der Verriegelungsbereich erstreckt sich im Wesentlichen senkrecht zu einer Querausdehnungsrichtung des Grundtragelements. Der Verriegelungsbereich ist in einer verriegelten Stellung an der Lageröffnung lösbar arretiert.

### Aufgabe

Der Erfindung liegt die Aufgabe zu Grunde, eine Kopfstütze der eingangs genannten Art zu verbessern, insbesondere eine einfache und verbesserte höhenverstellbare Kopfstütze anzugeben. Insbesondere soll eine Kopfstütze bereitgestellt werden, bei der ein Betätigungselement zum Entriegeln der Kopfstütze durch Austausch möglichst weniger Bauteile an unterschiedlichen Positionen angeordnet sein kann. Zudem liegt der Erfindung die Aufgabe zugrunde, einen Fahrzeugsitz mit einer entsprechenden Kopfstütze bereitzustellen.

### Lösung

Diese Aufgabe wird erfindungsgemäß gelöst durch eine Kopfstütze für einen Sitz, insbesondere Fahrzeugsitz, umfassend zumindest einen Kopfstützenkörper, ein Tragelement mit zumindest einem Stangenende zur Halterung des Kopfstützenkörpers, ein Grundtragelement mit zumindest einer Lageröffnung, durch welche das Stangenende hindurchgeführt ist, wobei das Grundtragelement mit dem Kopfstützenkörper verbunden ist und mit diesem relativ zum Tragelement höhenverstellbar ist, und ein Verriegelungselement zur Verriegelung des Grundtragelements in einer eingestellten Höhenposition an dem Tragelement, wobei das Verriegelungselement zumindest einen Verriegelungsbereich und einen Betätigungsbereich aufweist. Der Verriegelungsbereich erstreckt sich im Wesentlichen senkrecht zu einer Querausdehnungsrichtung des Grundtragelements und ist in einer verriegelten Stellung an der Lageröffnung lösbar arretiert. Der Betätigungsbereich erstreckt sich von dem Grundtragelement in einer Hochrichtung. Durch Betätigung des Betätigungsbereichs ist der Verriegelungsbereich von der Lageröffnung weg bewegbar.

Die Hochrichtung ist vorzugsweise weitgehend parallel, insbesondere parallel, zur einer Vertikalrichtung, insbesondere einer Fahrzeugvertikalrichtung. Die Querausdehnungsrichtung verläuft vorzugsweise parallel zu einer Querrichtung, insbesondere einer Fahrzeugquerrichtung.

Dadurch, dass der Verriegelungsbereich sich im Wesentlichen senkrecht zu einer Querausdehnungsrichtung des Grundtragelements erstreckt und in einer verriegelten Stellung an der Lageröffnung lösbar arretiert ist, und dass der Betätigungsbereich sich vom Grundtragelement in einer Hochrichtung erstreckt und durch Betätigung des Betätigungsbereichs der Verriegelungsbereich von der Lageröffnung weg bewegbar ist, kann ein Betätigungselement zum Entriegeln des Verriegelungselements an unterschiedlichen Positionen, insbesondere an unterschiedlichen Positionen in Vertikalrichtung angeordnet sein, ohne das Verriegelungselement an die Vertikalposition des Betätigungselements anpassen zu müssen. Das Verriegelungselement kann somit ein Gleichteil eines Kopfstützen-Baukastensystems sein, bei dem durch Auswahl unterschiedlicher Kopfstützenkörper das Betätigungselement an unterschiedlichen Positionen anordenbar ist.

Die Kopfstütze ist höhenverstellbar. Vorzugsweise weist die Kopfstütze ein Grundtragelement und ein darin angeordnetes, in einer Hochrichtung, insbesondere Vertikalrichtung höhenverschieblich führbares Halteelement auf. Das Halteelement kann zur Aufnahme und Halterung eines Kopfstützenkörpers, insbesondere eines ein- oder mehrteiligen Kopfstützenkörpers, dienen. Zur Ausbildung einer Führung des Kopfstützenkörpers zur Verstellung seiner Höhenposition umfasst das Grundtragelement vorzugsweise eine Anzahl von Lagern, insbesondere Gleitlagern, beispielsweise Gleit- oder Führungshülsen, mittels welcher der Kopfstützenkörper relativ zu einem Tragelement höhenverstellbar gelagert ist.

Zur Ausbildung einer Arretierung des Kopfstützenkörpers in einer eingestellten Höhenposition ist vorzugsweise ein zwischen einer entriegelnden Stellung und einer verriegelnden Stellung relativ zum Grundtragelement bewegbares Verriegelungselement vorgesehen. Das Verriegelungselement ist beispielsweise als ein Federdraht, insbesondere ein Federdrahtbügel oder eine Federdrahtschlinge, ausgebildet.

Das Halteelement umfasst vorzugsweise mindestens eine Ausnehmung für das Verriegelungselement und mindestens eine Aufnahme für ein Betätigungselement. Das Betätigungselement kann beweglich im Halteelement gelagert sein und mit dem Verriegelungselement zur Entriegelung oder Verriegelung des Verriegelungselements in Eingriff gelangen. In einer bevorzugten Ausführungsform umfasst der Kopfstützenkörper ein Halteelement, welches an dem Grundtragelement angeordnet ist und mit diesem relativ zum Tragelement höhenverschieblich ist.

Das Grundtragelement ist dabei vorzugsweise an dem wenigstens einen Tragelement lösbar fixierbar. Das Tragelement kann an einem Sitz, insbesondere einem Fahrzeugsitz, gehalten sein. Vorzugsweise ist der Kopfstützenkörper ist bei entriegeltem Grundtragelement mittels der Lager relativ zum Tragelement in Hochrichtung höhenverschieblich am Tragelement gelagert. Der Kopfstützenkörper kann mittels des wenigstens einen Tragelements an dem Fahrzeugsitz gehalten und mittels des Grundtragelements und des Verriegelungselements an dem Tragelement lösbar fixiert sein. Das Tragelement ist beispielsweise als ein U-förmiger Tragbügel oder als zwei Tragstangen ausgebildet.

Zur Fixierung des Kopfstützenkörpers in einer eingestellten Höhenposition an dem Tragelement umfasst das Tragelement vorzugsweise Formschlussmittel und Kraftschlussmittel, insbesondere Kerben, wobei das Verriegelungselement in eine der Kerben im verriegelten Zustand der Kopfstütze formschlüssig und kraftschlüssig eingreift. Dabei ist das Verriegelungselement derart eingerichtet, dass es in Richtung seiner verriegelnden oder arretierenden Stellung vorgespannt ist. Vorzugweise weist die Kopfstütze des Weiteren das Betätigungselement auf, mit dem das Verriegelungselement in die nicht arretierende Stellung überführt werden kann, wodurch das Einstellen einer Höhenposition des Kopfstützenkörpers ermöglicht ist, indem der Kopfstützenkörper relativ zum Tragelement nach oben oder unten bewegt, insbesondere verschoben, wird.

Das Verriegelungselement kann als ein Federdraht ausgebildet sein, dessen Befestigungsbereich am Grundtragelement befestigt, insbesondere formschlüssig und kraftschlüssig gehalten ist und dessen Verriegelungsbereich am Grundtragelement lösbar arretierbar ist. Ein Betätigungsbereich des Verriegelungselements kann sich vom Grundtragelement in Hochrichtung erstrecken, insbesondere vom Grundtragelement in Hochrichtung abstehen. Der Betätigungsbereich kann derart eingerichtet ein, dass das Verriegelungselement bei einem punktuellen Eingriff des Betätigungselements an einer beliebigen Stelle im Betätigungsbereich des Verriegelungselements entriegelt wird und aus der verriegelten Stellung in die entriegelte Stellung gestellt wird, so dass der Kopfstützenkörper frei bewegbar, insbesondere höhenverschieblich, ist. Durch ein Loslassen oder Nichtbetätigen des Betätigungselements wird das Verriegelungselement vorzugsweise automatisch, beispielsweise durch eine Federkraft des Federdrahtes, in die verriegelte Stellung am Grundtragelement gestellt, so dass der Kopfstützenkörper verriegelt, also in Hochrichtung fixiert gehalten ist.

Darüber hinaus bilden zumindest ein vom Grundtragelement abragendes Ende des Betätigungsbereichs einen oberen Höhenanschlag für eine Montageposition des Betätigungselements am Kopfstützenkörper und das Grundtragelement, insbesondere eine Oberflächenseite, einen unteren Höhenanschlag für eine Montageposition des Betätigungselements am Kopfstützenkörper.

Die mit der Erfindung erzielten Vorteile bestehen unter anderem darin, dass ein Kopfstützenkörper der höhenverstellbaren Kopfstütze besonders einfach auch in Fahrzeughochrichtung verstellbar ist und dass die Kopfstütze eine besonders kompakte Bauform aufweist und einfach zu montieren ist. Mittels der erfindungsgemäßen Kopfstütze sind ein Komfort bei der Nutzung derselben und eine Sicherheit für einen Fahrzeuginsassen verbessert.

In einer Ausführungsform umfasst das Grundtrageelement zwei voneinander beabstandete Lageröffnungen und das Verriegelungselement weist zwei mit den Lageröffnungen korrespondierende Verriegelungsbereiche auf.

In einer bevorzugten Ausführungsform sind der zumindest eine Verriegelungsbereich und der Betätigungsbereich des Verriegelungselements einteilig ausgebildet. Das Verriegelungselement ist vorzugsweise aus einem mehrfach gebogenen Federdraht gebildet, insbesondere aus einem einteiligen Federdraht. Bei Betätigung des Betätigungsbereichs verschiebt dieser beispielweise durch Deformation den zumindest einen Verriegelungsbereich in Querausdehnungsrichtung des Grundtragelements.

Der zumindest eine Verriegelungsbereich kann auf einer Oberflächenseite des Grundtragelements verschieblich angeordnet und im Wesentlichen senkrecht zur Querausdehnungsrichtung des Grundtragelements verlaufend ausgebildet sein. Insbesondere ist der zumindest eine Verriegelungsbereich im Wesentlichen senkrecht zur Querausdehnungsrichtung des Grundtragelements im Bereich der Lageröffnung angeordnet. Der Betätigungsbereich ist im Wesentlichen U-förmig, C-förmig, J-förmig oder L-förmig ausgebildet und ragt im Wesentlichen senkrecht von dem Verriegelungsbereich ab. Der Verriegelungsbereich verläuft vorzugsweise im Wesentlichen entlang einer horizontalen Ebene. Der Betätigungsbereich verläuft vorzugsweise im Wesentlichen entlang einer vertikalen Ebene.

Der Kopfstützenkörper kann ein Betätigungselement umfassen, welches mit dem Betätigungsbereich des Verriegelungselements gekoppelt ist. Zur Kopplung des Betätigungselements mit dem Betätigungsbereich kann das Betätigungselement an dem Betätigungsbereich anliegen oder direkt oder indirekt mit dem Betätigungsbereich derart wirkverbunden sein, dass zumindest in einer Richtung aus einer Bewegung des Betätigungselements eine Bewegung des Betätigungsbereichs resultiert.

Die zumindest eine Lageröffnung kann eine schlitzförmige Öffnung aufweisen, wobei der zumindest eine Verriegelungsbereich in einem verriegelten Zustand des Grundtragelements in der Öffnung angeordnet ist und dadurch das Grundtragelement an dem Stangenende des Tragelements arretiert ist. Beispielsweise ist der zumindest eine Verriegelungsbereich in einem verriegelten Zustand des Grundtragelements in der Öffnung angeordnet und mit dem Tragelement, insbesondere mit dem Stangenende, im arretierten Eingriff.

Das Grundtragelement kann zumindest ein Lager, welches in der Lageröffnung des Grundtragelements gehalten ist und mittels welcher der Kopfstützenkörper relativ zu dem Tragelement an diesem höhenverstellbar gelagert ist, umfassen.

Die Aufgabe wird zudem gelöst durch einen Sitz, insbesondere einen Fahrzeugsitz. Der Sitz umfasst zumindest eine Rückenlehne und einer an der Rückenlehne angeordneten Kopfstütze gemäß vorherstehender Beschreibung.

Vorteilhafte Ausgestaltungen, welche einzeln oder in Kombination miteinander eingesetzt werden können, sind Gegenstand der Unteransprüche.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine Seitenansicht eines erfindungsgemäßen Fahrzeugsitzes mit einer erfindungsgemäßen Kopfstütze,
- Fig. 2:: in perspektivischer Darstellung einer erfindungsgemäßen Kopfstütze,
- Fig. 3A:: eine Seitenansicht einer erfindungsgemäßen Kopfstütze, wobei ein Kopfstützenkörper in einer unteren Höhenposition angeordnet ist,
- Fig. 3B:: eine weitere Seitenansicht der erfindungsgemäßen Kopfstütze, wobei der Kopfstützenkörper in einer oberen Höhenposition angeordnet ist,
- Fig. 4:: eine Explosionsdarstellung einer ersten Ausführungsform einer erfindungsgemäßen Kopfstütze,
- Fig. 5:: eine Explosionsdarstellung einer zweiten Ausführungsform einer erfindungsgemäßen Kopfstütze,
- Fig. 6:: eine perspektivische Ansicht eines Lagers, insbesondere eines Gleitlagers für eine erfindungsgemäße Kopfstütze,
- Fig. 7:: eine weitere perspektivische Ansicht des Lagers aus Fig. 6,
- Fig. 8:: eine Explosionsdarstellung eines Grundtragelements und zweier Lager der ersten Ausführungsform aus Fig. 4,
- Fig. 9:: eine perspektivische Ansicht des Grundtragelement und der beiden Lager aus Fig. 8 in einem montierten Zustand,
- Fig. 10:: ausschnittsweise eine Draufsicht auf das Grundtragelement aus Fig. 8 und ein darin montiertes Lager,
- Fig. 11:: eine Explosionsdarstellung eines Grundtragelements und zweier Lager der zweiten Ausführungsform aus Fig. 5
- Fig. 12:: eine perspektivische Ansicht des Grundtragelement und der beiden Lager aus Fig. 11 in einem montierten Zustand,
- Fig 13:: ausschnittsweise eine Draufsicht auf das Grundtragelement aus Fig. 8 und ein darin montiertes Lager,
- Fig. 14:: eine perspektivische Ansicht eines Verriegelungselements einer erfindungsgemäßen Kopfstütze,
- Fig. 15:: eine Fig. 9 entsprechende Ansicht, ergänzt um das Verriegelungselement aus Fig. 14 vor einer Montage an das Grundtragelement aus Fig. 8,
- Fig. 16:: eine Fig. 15 entsprechende Ansicht, wobei das Verriegelungselement an dem Grundtragelement montiert dargestellt ist,
- Fig. 17:: ausschnittsweise eine weitere perspektivische Ansicht auf das an dem Grundtragelement aus Fig. 8 montierte Verriegelungselement aus Fig. 14,
- Fig. 18A:: ausschnittsweise eine perspektivische Ansicht auf das Grundtragelement aus Fig. 8, das Verriegelungselement aus Fig. 14 und ein Betätigungselement zur Betätigung des Verriegelungselements,
- Fig. 18B:: eine Vorderansicht der Anordnung aus Fig. 18A, wobei sich das Betätigungselement in einem unbetätigten Zustand,
- Fig. 19:: einen Schnitt durch einen Verriegelungsbereich der Anordnung aus Fig. 18A, wobei sich das Betätigungselement in einem unbetätigten Zustand und das Verriegelungselement in einer ein Tragelement verriegelnden Stellung befindet,
- Fig. 20:: eine Vorderansicht der Anordnung aus Fig. 18A, wobei sich das Betätigungselement in einem betätigten Zustand und das Verriegelungselement in einer entriegelten Stellung befindet,
- Fig. 21:: einen Fig. 19 entsprechenden Schnitt, wobei sich das Betätigungselement in einem betätigten Zustand und das Verriegelungselement in einer entriegelten Stellung befindet,
- Fig. 22:: eine Vorderansicht des Grundtragelements aus Fig. 8 mit daran befestigtem Verriegelungselement aus Fig. 14, und
- Fig. 23A:: eine Vorderansicht des Grundtragelements aus Fig. 8 mit daran befestigtem Verriegelungselement aus Fig. 14 und einem Betätigungselement in einer oberen Montageposition,
- Fig. 23B:: eine Fig. 23A entsprechende Ansicht, wobei das Betätigungselement in einer mittleren Montageposition angeordnet ist, und
- Fig. 23C:: eine Fig. 23A entsprechende Ansicht, wobei das Betätigungselement in einer unteren Montageposition angeordnet ist.

Einander entsprechende Teile sind in allen Figuren mit den gleichen Bezugszeichen versehen.

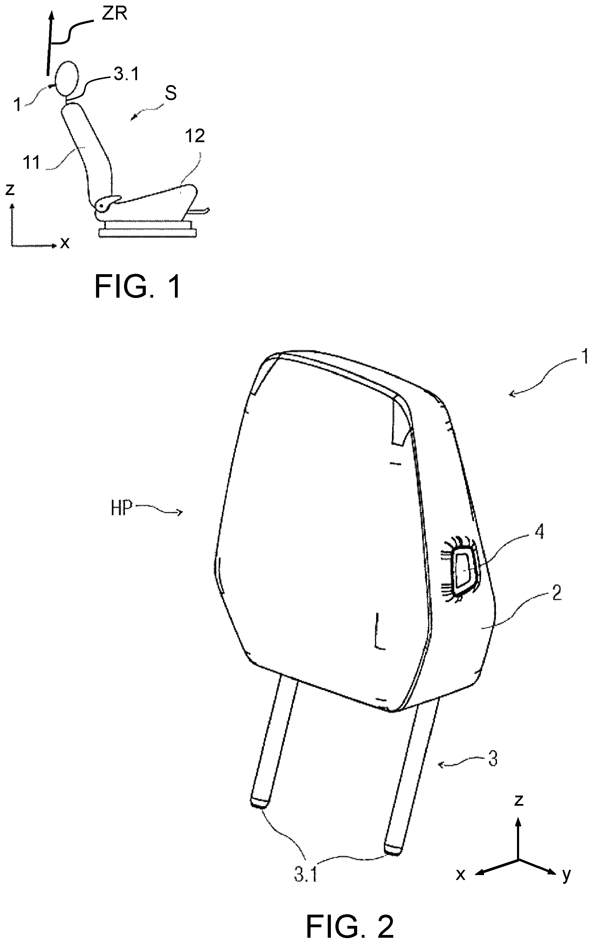

Ein in der Figur 1 schematisch dargestellter Fahrzeugsitz S wird nachfolgend unter Verwendung von drei senkrecht zueinander verlaufenden Raumrichtungen beschrieben. Eine Längsrichtung x verläuft bei einem im Fahrzeug eingebauten Fahrzeugsitz S weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz S verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz S sitzenden Insassen in normaler Sitzposition, wobei der Fahrzeugsitz S im Fahrzeug eingebaut, in einer zur Personenbeförderung geeigneten Gebrauchsposition mit aufrecht stehender Rückenlehne 11 und wie üblich in Fahrtrichtung ausgerichtet ist. Der erfindungsgemäße Fahrzeugsitz S kann jedoch auch in abweichender Ausrichtung, beispielsweise quer zur Fahrtrichtung, verbaut werden.

Der Fahrzeugsitz S weist die Rückenlehne 11 und ein Sitzteil 12 auf. Eine erfindungsgemäße Kopfstütze 1 ist an der Rückenlehne 11 angeordnet. Die Figur 2 zeigt schematisch in perspektivischer Ansicht die Kopfstütze 1 mit einem höhenverstellbaren Kopfstützenkörper 2. Der Kopfstützenkörper 2 kann aus natürlichen Materialien oder aus einem Kunststoffmaterial oder einer Kombination aus beiden hergestellt sein.

Der Kopfstützenkörper 2 ist an einem Tragelement 3 angeordnet. Das Tragelement 3 ist wiederum an dem Fahrzeugsitz S anordenbar, vorzugsweise befestigbar. Das Tragelement 3 ist vorliegend als ein gebogener Metalldraht ausgeführt. Das Tragelement 3 weist zwei in entsprechende Führungshülsen des Fahrzeugsitzes S einsteckbare Stangenenden 3.1 auf, die mit einem Quersteg miteinander verbunden sind. Das Tragelement 3 ist vorzugsweise einteilig gefertigt. Die beiden Stangenenden 3.1 dienen einer höhenverstellbaren, also in Vertikalrichtung z verstellbaren, Aufnahme des Kopfstützenkörpers 2.

Zur Höhenverstellung des Kopfstützenkörpers 2 relativ zu dem Tragelement 3 ist ein Betätigungselement 4 am Kopfstützenkörper 2 angeordnet, mittels dessen Betätigung eine Arretierung des Kopfstützenkörpers 2 in einer Höhenposition HP lösbar ist, wodurch der Kopfstützenkörper 2 nach oben oder nach unten (vorliegend weitgehend in und entgegen der Vertikalrichtung z) frei beweglich und damit höhenverschieblich ist. Durch die Formulierung "weitgehend parallel zu der Vertikalrichtung z" sollen auch Winkelabweichungen zu der Vertikalrichtung z eingeschlossen sein, die sich insbesondere aus einer Komfortwinkel-Einstellung der Rückenlehne 11 ergeben. Diese Winkelabweichungen können bis zu 30 Grad zur Vertikalrichtung z betragen.

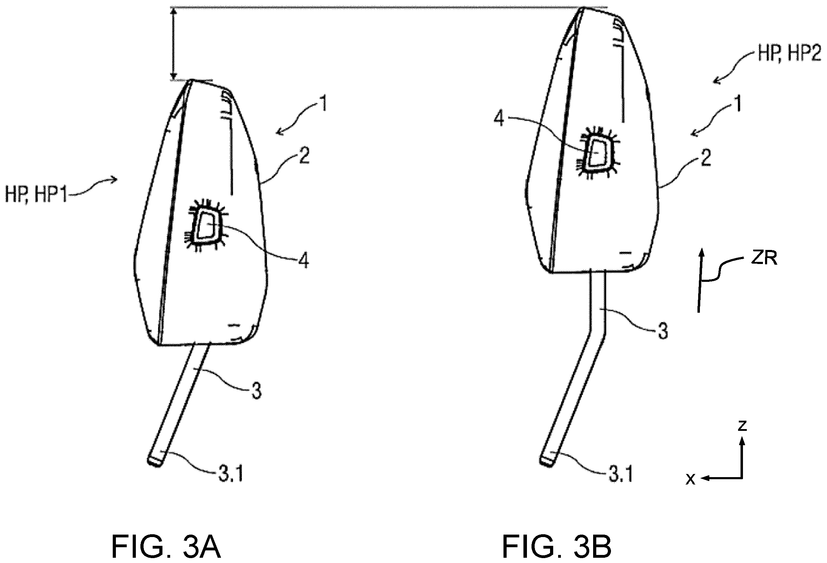

Der Kopfstützenkörper 2 ist, insbesondere weitgehend parallel zu der Vertikalrichtung z, stufenweise höhenverstellbar und wahlweise in einer von mehreren Höhenpositionen HP lösbar arretierbar. Die gestuften Höhenpositionen HP sind eine unteren Höhenposition HP1, eine oberen Höhenposition HP2 und mehrere zwischen der unteren Höhenposition HP1 und der oberen Höhenposition HP2 angeordnete Höhenpositionen HP. Die Figur 3A zeigt die Kopfstütze 1, wobei der Kopfstützenkörper 2 in einer relativ zu dem Tragelement 3 unteren Höhenposition HP1 arretiert ist. Die Figur 3B zeigt den Kopfstützenkörper 2 in einer relativ zum Tragelement 3 oberen Höhenposition HP2.

Der Kopfstützenkörper 2 ist wahlweise in der unteren Höhenposition HP1, in der oberen Höhenposition HP2 oder stufenweise in jeder der Höhenpositionen HP zwischen der unteren Höhenposition HP1 und der oberen Höhenposition HP2 lösbar arretierbar.

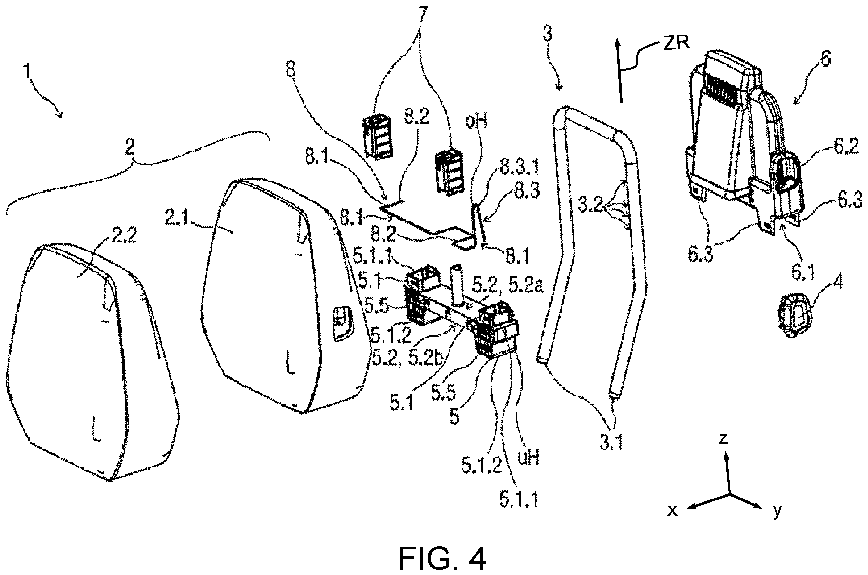

Die Figur 4 zeigt in Explosionsdarstellung eine erste Ausführungsform einer erfindungsgemäßen Kopfstütze 1. Die Kopfstütze 1 umfasst ein Grundtragelement 5 und ein an diesem angeordnetes Halteelement 6. Das Grundtragelement 5 ist mittels eines Verriegelungselements 8 an dem Tragelement 3 in einer eingestellten Höhenposition HP lösbar fixiert. Das Grundtragelement 5 und das Halteelement 6 sind dabei relativ zum Tragelement 3 in Vertikalrichtung z höhenverschieblich am Tragelement 3 gelagert. Das Tragelement 3 ist im Ausführungsbeispiel als ein U-förmiger Tragbügel ausgebildet. Alternativ kann das Tragelement 3 als ein Paar von Tragstangen ausgebildet sein. Das Tragelement 3 kann aus einem Kunststoffmaterial oder aus einem Metall oder einer Metalllegierung gebildet sein.

Das Grundtragelement 5 ist aus einem Kunststoffmaterial, insbesondere einem hochfesten Kunststoffmaterial, gebildet. Das Grundtragelement 5 ist an dem wenigstens einen Tragelement 3 lösbar fixiert gehalten. Das Tragelement 3 ist in nicht näher dargestellter, üblicher Art und Weise an dem Fahrzeugsitz S gehalten.

Das Halteelement 6 dient zur Aufnahme und Halterung des Kopfstützenkörpers 2. Der Kopfstützenkörper 2 ist beispielsweise aus einem Schaumstoffkörper 2.1 und einem Bezugselement 2.2 gebildet. Alternativ kann der Kopfstützenkörper 2 einteilig, insbesondere aus einem Polsterkörper gebildet, oder mehrteilig ausgebildet sein. Das Grundtragelement 5 und das an diesem befestigte Halteelement 6 sind relativ zu dem Tragelement 3 manuell höhenverstellbar, insbesondere höhenverschieblich.

Zur Ausbildung einer Führung des Kopfstützenkörpers 2, insbesondere des Grundtragelements 5 zur Verstellung der Höhenposition HP des Kopfstützenkörpers 2 umfasst das Grundtragelement 5 in der ersten Ausführungsform zwei Lager 7, insbesondere Gleitlager, mittels welcher der Kopfstützenkörper 2 relativ zu dem Tragelement 3 an diesem höhenverstellbar gelagert ist.

Die Lager 7 sind in Lageröffnungen 5.1 des Grundtragelements 5 formschlüssig und kraftschlüssig angeordnet und gehalten. Die Lageröffnungen 5.1 weisen Fortsätze 5.1.1 und 5.1.2 auf, die nach oben und unten vom Grundtragelement 5 abragen. Die Fortsätze 5.1.1 und 5.1.2 überragen dabei eine obere Oberflächenseite 5.2a und eine untere Oberflächenseite 5.2b des Grundtragelements 5. Zumindest die oberen Fortsätze 5.1.1, insbesondere deren Außenkonturen, sind korrespondierend zu Ausnehmungen 6.1 des Halteelements 6, insbesondere zu deren Innenkonturen, ausgebildet, um das Halteelement 6 und das Grundtragelement 5 miteinander zu verbinden.

Zusätzlich kann das Halteelement 6 Befestigungsmittel 6.3, insbesondere Rastlaschen mit Rastöffnungen, umfassen, welche von den Ausnehmungen 6.1 in Richtung des Grundtragelements 5 abragen. Das Grundtragelement 5 kann zusätzlich korrespondierende Befestigungsmittel 5.5 aufweisen. Die korrespondierenden Befestigungsmittel 5.5 sind beispielsweise Rastaufnahmen, zum Beispiel Rastnasen, die an der Außenkontur der unteren Fortsätze 5.1.2 ausgebildet sind. In einem montierten Zustand, insbesondere in einem aufgesteckten Zustand des Halteelements 6 auf dem Grundtragelement 5, sind die Befestigungsmittel 6.3 des Halteelements 6 im Bereich der Fortsätze 5.1.1, 5.1.2 angeordnet. Die korrespondierenden Befestigungsmittel 5.5 des Grundtragelements 5 gelangen in Eingriff mit der Rastöffnung der Rastlaschen. Dadurch ist das Halteelement 6 mit dem Grundtragelement 5 lösbar verbunden, insbesondere verclipst.

Zur Arretierung des Kopfstützenkörpers 2 in einer eingestellten Höhenposition HP ist ein zwischen einer entriegelnden Stellung und einer verriegelnden Stellung relativ zum Grundtragelement 5 bewegbares Verriegelungselement 8 vorgesehen. Das Verriegelungselement 8 ist beispielsweise als ein Federdraht, insbesondere ein Federdrahtbügel oder eine Federdrahtschlinge, ausgebildet. Da sich die Geometrie des Federdrahts bei Betätigung des Verriegelungselements 8 geringfügig ändert, werden nachfolgend Begriffe wie im Wesentlichen, annähernd und weitgehend verwendet, beispielsweise weitgehend parallel oder weitgehend senkrecht. Diese Begriffe sollen Abweichungen, insbesondere Abweichungen von einer exakten Parallelität oder Rechtwinkligkeit, umfassen, die sich aus Fertigungstoleranzen, Messtoleranzen und einer ordnungsgemäßen Betätigung des Verriegelungselements 8 ergeben.

Das Halteelement 6 umfasst mindestens eine Ausnehmung 6.1 für das Verriegelungselement 8 und mindestens eine Aufnahme 6.2 für das Betätigungselement 4. Das Betätigungselement 4 ist beweglich im Halteelement 6 in dessen Aufnahme 6.2 gelagert. Zur Entriegelung oder Verriegelung des Verriegelungselements 8 ist das Betätigungselement 4 in Wirkverbindung mit dem Verriegelungselement 8. Mittels des Betätigungselements 4 ist das Verriegelungselement 8 in die nicht arretierende Stellung überführbar. In der nicht arretierenden Stellung des Verriegelungselements 8 ist das Einstellen einer Höhenposition HP des Kopfstützenkörpers 2 ermöglicht, indem der Kopfstützenkörper 2 relativ zum Tragelement 3 nach oben oder unten bewegbar, insbesondere verschiebbar ist.

Der Kopfstützenkörper 2 ist bei entriegeltem Grundtragelement 5 mittels der Lager 7 relativ zu dem Tragelement 3 in Vertikalrichtung z höhenverschieblich am Tragelement 3 gelagert.

Zur Fixierung des Kopfstützenkörpers 2 in seiner eingestellten Höhenposition HP an dem Tragelement 3 umfasst das Tragelement 3 mehrere Formschlussmittel und Kraftschlussmittel 3.2, insbesondere Kerben. Die Formschlussmittel und Kraftschlussmittel 3.2 sind in Vertikalrichtung z versetzt zueinander angeordnet. Jedes der mehreren Formschlussmittel und Kraftschlussmittel 3.2 ist einer Höhenposition HP zugeordnet. In einem verriegelten Zustand der Kopfstütze 1 ist das Verriegelungselement 8 mit einem der Formschlussmittel und Kraftschlussmittel 3.2 formschlüssig und kraftschlüssig in Eingriff. Vorzugsweise ist das Verriegelungselement 8 derart eingerichtet, insbesondere vorgespannt, dass es in Richtung des Eingriffs mit einem der Formschlussmittel und Kraftschlussmittel 3.2, das heißt in eine der seiner verriegelnden oder arretierenden Stellung vorgespannt ist.

Das Verriegelungselement 8 ist vorliegende als ein Federdraht ausgebildet und umfasst einen Befestigungsbereich 8.1, einen Verriegelungsbereich 8.2 und einen Betätigungsbereich 8.3. Mittels des Befestigungsbereichs 8.1 ist das Verriegelungselement 8 am Grundtragelement 5 befestigt, insbesondere formschlüssig und kraftschlüssig gehalten. Mittels des Verriegelungsbereiches 8.2 wird die Kopfstütze 1 am Tragelement 3 fixiert und gehalten. Mittels des Betätigungsbereichs 8.3 wird das Verriegelungselement 8 aus einer verriegelnden Stellung in eine entriegelnde Stellung oder umgekehrt gestellt.

Der Betätigungsbereich 8.3 verläuft in einer Hochrichtung ZR. Die Hochrichtung ZR ist weitgehend parallel, insbesondere parallel, zur Vertikalrichtung z. Durch die Formulierung "weitgehend parallel zu der Vertikalrichtung z" sollen auch Winkelabweichungen zu der Vertikalrichtung z eingeschlossen sein, die sich insbesondere aus einer Komfortwinkel-Einstellung der Rückenlehne 11 ergeben. Diese Winkelabweichungen können bis zu 30 Grad zur Vertikalrichtung z betragen.

Der Betätigungsbereich 8.3 verläuft weitgehend senkrecht, insbesondere senkrecht, zum Verriegelungsbereich 8.2. Der Befestigungsbereich 8.1 kann ein Teilbereich des Betätigungsbereichs 8.3 und/oder des Verriegelungsbereichs 8.2 sein.

Der Betätigungsbereich 8.3 erstreckt sich vom Grundtragelement 5 senkrecht nach oben parallel zur Vertikalrichtung z. Insbesondere steht der Betätigungsbereich 8.3 vom Grundtragelement 5 in Vertikalrichtung z ab. Der Betätigungsbereich 8.3 ist U-förmig ausgebildet. Hierzu ist das Verriegelungselement 8 im Betätigungsbereich 8.3 als ein U-förmig gebogener Federdraht ausgebildet.

Der Betätigungsbereich 8.3 ist derart ausgelegt, dass das Betätigungselement 4 an mehreren Stellen unterschiedlicher Höhe in Vertikalrichtung z positioniert sein kann, und eine Betätigung des Betätigungselement 4 dennoch immer den Verriegelungsbereich 8.2 entriegelt, das heißt den Verriegelungsbereich 8.2 aus der verriegelten Stellung VS in die entriegelte Stellung ES stellt, so dass der Kopfstützenkörper 2 frei bewegbar, insbesondere höhenverschieblich, ist. Aufgrund der in Grenzen frei wählbaren Montageposition des Betätigungselements 4 relativ zum Betätigungsbereich 8.3 kann das Verriegelungselement 8 als Gleichteil in unterschiedlichen Kopfstützenvarianten eingesetzt werden.

Ein von dem Grundtragelement 5 abragendes Ende 8.3.1 des Betätigungsbereichs 8.3 bildet einen oberen Höhenanschlag oH für eine Montageposition des Betätigungselements 4 am Kopfstützenkörper 2. Das Grundtragelement 5, insbesondere eine Oberflächenseite 5.2, bildet einen unteren Höhenanschlag uH für eine Montageposition des Betätigungselements 4 am Kopfstützenkörper 2.

Beim Loslassen oder Nichtbetätigen des Betätigungselements 4 wird das Verriegelungselement 8 automatisch, beispielsweise durch Federkraft des Federdrahtes im Betätigungsbereich 8.3 und im Verriegelungsbereich 8.2, in die verriegelte Stellung am Grundtragelement 5 gestellt, so dass der Kopfstützenkörper 2 verriegelt, also in Vertikalrichtung z fixiert am Tragelement 3 gehalten ist.

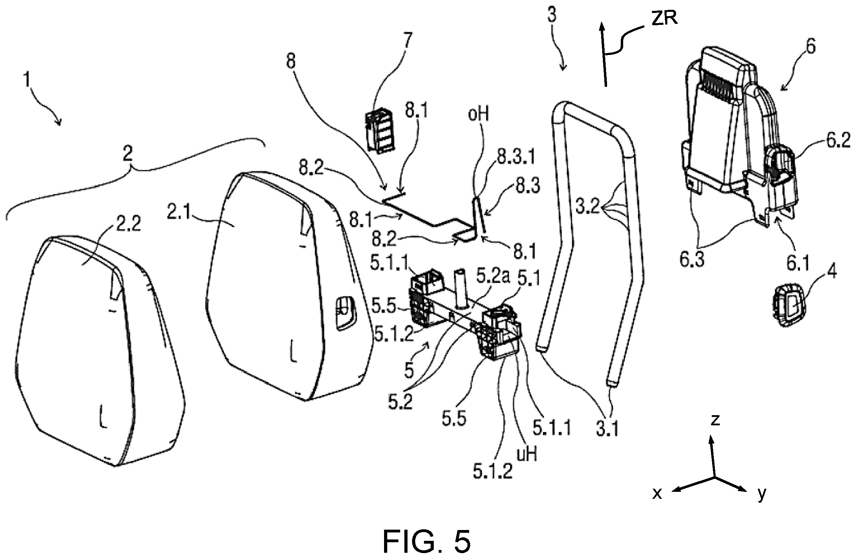

Die Figur 5 zeigt schematisch eine Explosionsdarstellung einer zweiten Ausführungsform einer erfindungsgemäßen Kopfstütze 1. Die zweite Ausführungsform der Kopfstütze 1 unterscheidet sich in der Anzahl der Lager 7. Anstelle von zwei Lagern 7 des ersten Ausführungsbeispiels nach Figur 4 umfasst das Grundtragelement 5 des zweiten Ausführungsbeispiels nur ein einziges Lager 7.

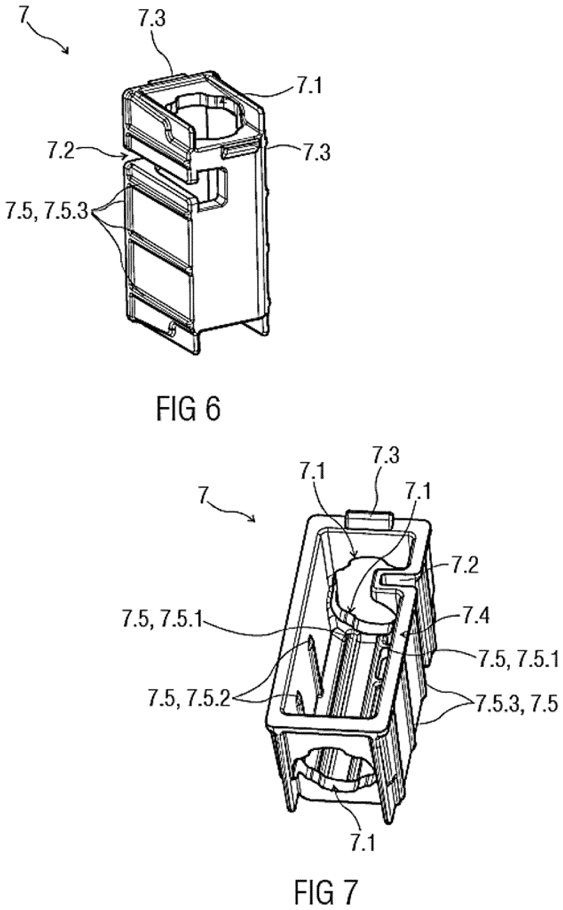

Die Figuren 6 und 7 zeigen schematisch in verschiedenen perspektivischen Ansichten eine Ausführungsform für das jeweilige Lager 7 der Ausführungsformen gemäß Figur 4 und Figur 5. Das jeweilige Lager 7 ist als ein Gleitlager, insbesondere als eine Gleithülse ausgebildet.

Das jeweilige Lager 7 umfasst eine Innengleitfläche 7.1 zur Aufnahme des Tragelements 3 und zur verschieblichen Lagerung des Tragelements 3 in dem Lager 7. Das Lager 7 kann einen runden oder eckigen Querschnitt aufweisen. Darüber hinaus umfasst das Lager 7 eine Aussparung 7.2 zur Aufnahme des Verriegelungselements 8 in dessen verriegelnder Stellung.

Zur Fixierung des Lagers 7 im Grundtragelement 5, insbesondere in der Lageröffnung 5.1, umfasst das Lager 7 mindestens ein Befestigungselement 7.3, insbesondere eine Rastnase. Das Lager 7 weist entlang seiner Längsausdehnung mindestens eine Längsöffnung 7.4 auf. Diese Längsöffnung 7.4 dient insbesondere der Aufnahme des Tragelements 3, insbesondere eines beispielsweise gebogenen Bereichs des Tragelements 3.

Das Lager 7 kann Rippen 7.5 zur höheren Stabilität und Festigkeit und/oder Führung aufweisen. Die Rippen 7.5 können dabei sowohl innen- als auch außenseitig am hülsenförmigen Lager 7 vorgesehen, insbesondere aus- oder angeformt, sein. Die Rippen 7.5 können beispielsweise innere Längsrippen 7.5.1 sein, welche zum Führen und Gleiten des Kopfstützenkörpers 2 am Tragelement 3 dienen. Weitere Rippen 7.5 können als innere Querrippen 7.5.2 ausgebildet sein, welche der Erhöhung der Stabilität und Festigkeit des Lagers 7 dienen. Weitere Rippen 7.5, die als äußere Rippen 7.5.3 in Längs- und/oder Querausdehnung des Lagers 7 verlaufen, dienen insbesondere der Erhöhung der Stabilität und Festigkeit des Lagers 7 und/oder der zusätzlichen Fixierung des Lagers 7 im Grundtragelement 5.

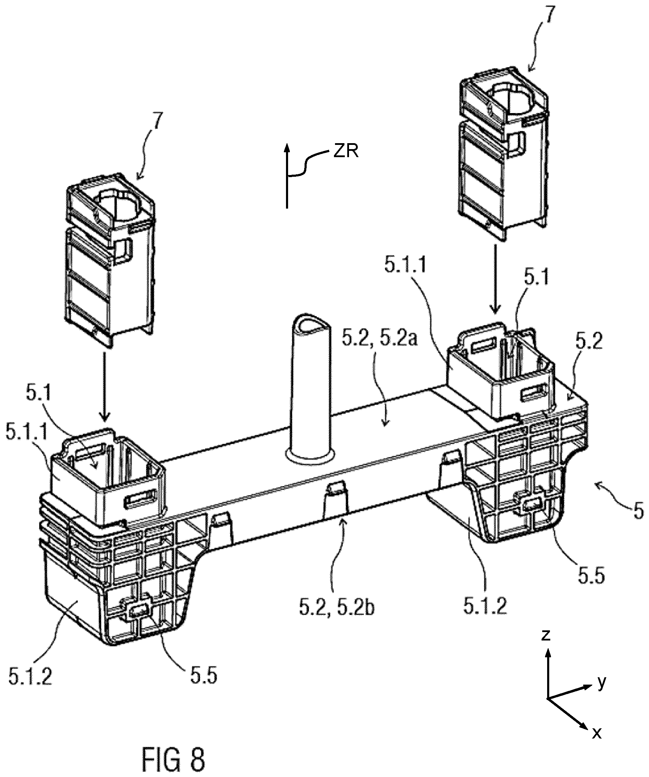

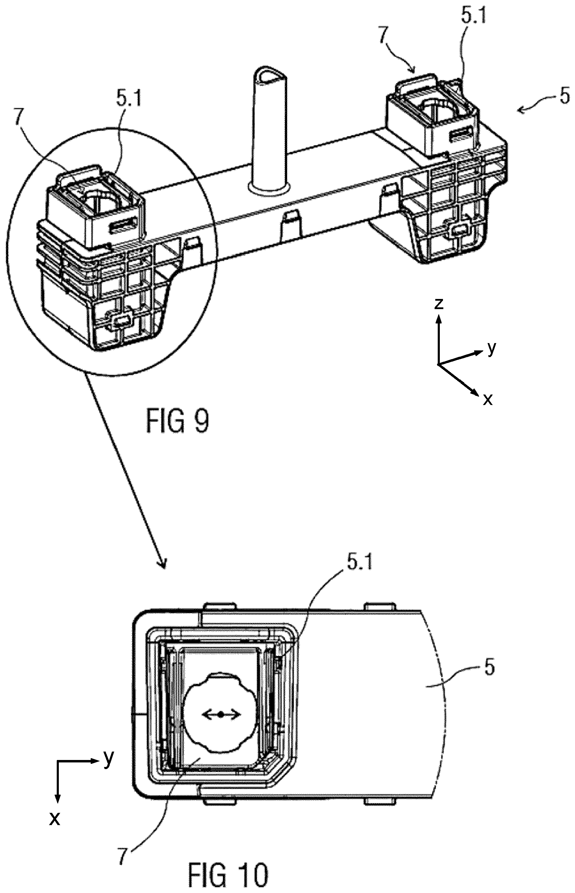

Die Figuren 8 bis 10 zeigen schematisch verschiedene Ansichten der ersten Ausführungsform der Kopfstütze 1 mit zwei Lagern 7. Dabei sind die beiden Lager 7 hinsichtlich Form, Größe und Abmessungen identisch ausgebildet. Die Figur 8 zeigt die Montage der Lager 7 in den Lageröffnungen 5.1 des Grundtragelements 5. Die Figur 9 zeigt die im Grundtragelement 5 montierten Lager 7 in perspektivischer Ansicht. Die Figur 10 zeigt die im Grundtragelement 5 montierten Lager 7 in Draufsicht.

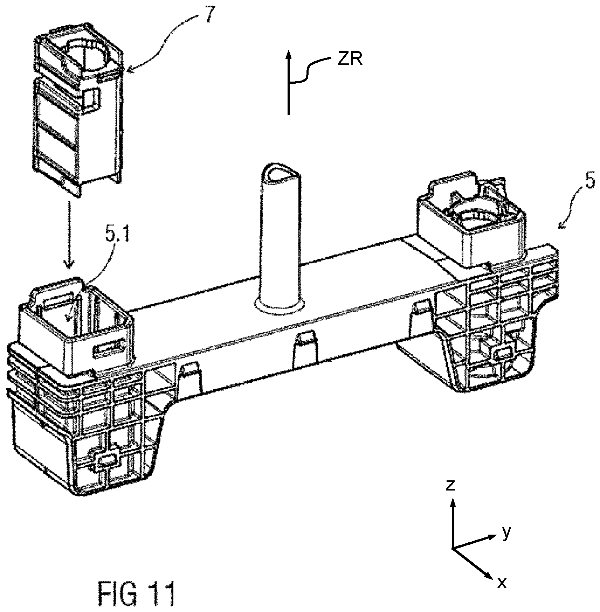

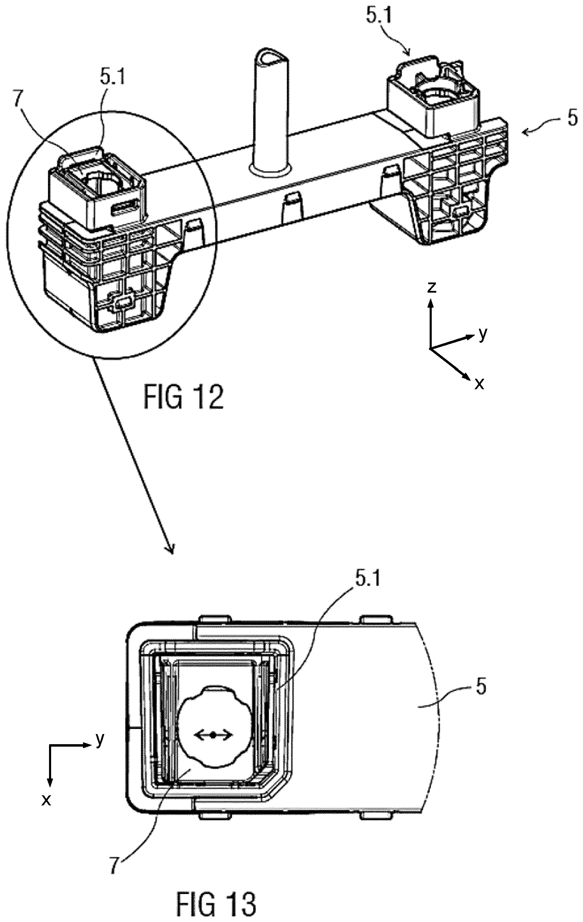

Die Figuren 11 bis 13 zeigen schematisch verschiedene Ansichten der zweiten Ausführungsform der Kopfstütze 1 mit einem einzigen Lager 7. Die Figur 11 zeigt die Montage des Lagers 7 in eine der Lageröffnungen 5.1 des Grundtragelements 5. Die Figur 12 zeigt das im Grundtragelement 5 montierte Lager 7 in perspektivischer Ansicht. Die Figur 13 zeigt das im Grundtragelement 5 montierte Lager 7 in Draufsicht. Das Grundtragelement 5 und das Lager 7 des zweiten Ausführungsbeispiels können hinsichtlich Form, Größe und Abmessungen identisch zum Grundtragelement 5 und die Lager 7 des ersten Ausführungsbeispiels ausgebildet sein.

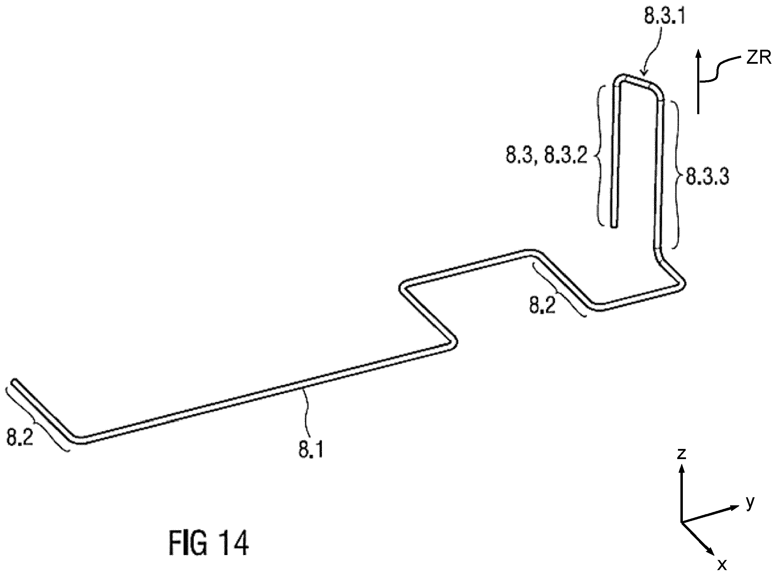

Die Figur 14 zeigt eine Ausführungsform für das Verriegelungselement 8. Dieses Verriegelungselement 8 kann sowohl in der ersten Ausführungsform der Kopfstütze 1 (dargestellt in der Figur 3) als auch in der zweiten Ausführungsform der Kopfstütze 1 (dargestellt in der Figur 4) eingesetzt werden. Das Verriegelungselement 8 ist als ein Federdraht ausgebildet und umfasst den Befestigungsbereich 8.1, mindestens einen, im Beispiel zwei Verriegelungsbereiche 8.2 und den Betätigungsbereich 8.3. Die jeweiligen Bereiche sind durch entsprechend gebogene Drahtbereiche gebildet. Der Befestigungsbereich 8.1 und die Verriegelungsbereiche 8.2 können dabei entsprechend fester ausgebildet sein, als der Betätigungsbereich 8.3, der insbesondere flexibel, beispielsweise federnd ausgebildet ist.

Der Betätigungsbereich 8.3 kann darüber hinaus in einen flexiblen Bereich 8.3.2 und einen Eingriffsbereich 8.3.3 für das Betätigungselement 4 unterteilt sein. Das Ende 8.3.1 des Betätigungsbereichs 8.3 verbindet den flexiblen Bereich 8.3.2 und den Eingriffsbereich 8.3.3 miteinander. Der flexible Bereich 8.3.2 und der Eingriffsbereich 8.3.3 verlaufen in einem unbetätigten Zustand des Betätigungselements 4 beabstandet und weitgehend parallel zueinander. Vorzugsweise verlaufen der flexible Bereich 8.3.2 und der Eingriffsbereich 8.3.3 jeweils weitgehend parallel zur Vertikalrichtung z. Das Ende 8.3.1 des Betätigungsbereichs 8.3 verläuft vorzugsweise weitgehend in einer Ebene, die senkrecht zur Vertikalrichtung z verläuft. Das Ende 8.3.1 des Betätigungsbereichs 8.3 verläuft vorzugsweise schräg zur Längsrichtung x, in einem unbetätigten Zustand des Betätigungselements 4 insbesondere in einem Winkel von annähern 45 Grad schräg zur Längsrichtung x.

Das Verriegelungselement 8 ist einteilig und mit seinen verschiedenen Bereichen als ein Multifunktionselement mit integrierter kombinierter Befestigungs-, Verriegelungs-, Feder- und Betätigungsfunktion ausgebildet.

Der Betätigungsbereich 8.3 ist derart ausgebildet, dass verschiedene Kopfstützenkörper 2 mit zueinander unterschiedlich hoch positioniertem Betätigungselement 4 auf das Grundtragelement 5 angeordnet werden können. Die sich ergebende Anordnung des Betätigungselements 4 in Vertikalrichtung z relativ zu dem Grundtragelement 5 und somit relativ zu dem Betätigungsbereich 8.3 ist innerhalb von, insbesondere durch die Länge des Betätigungsbereich 8.3 definierten, Grenzen frei wählbar.

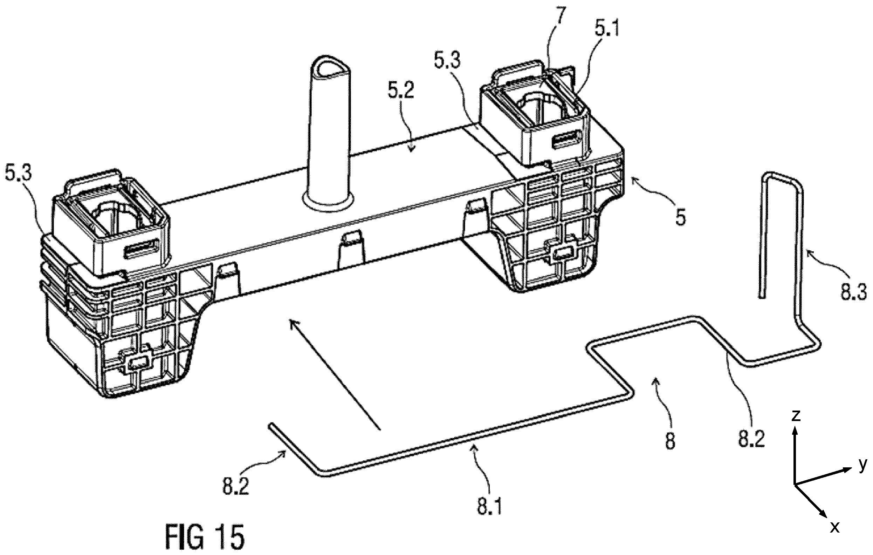

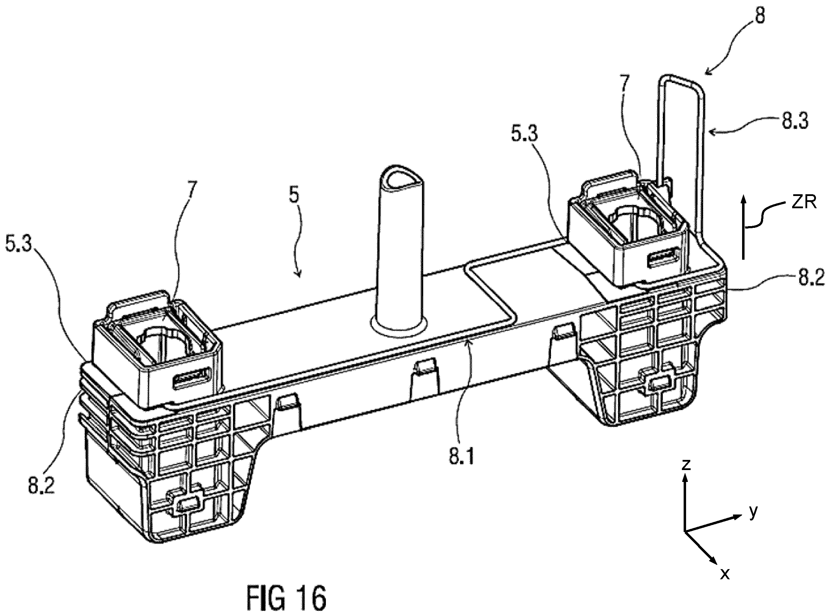

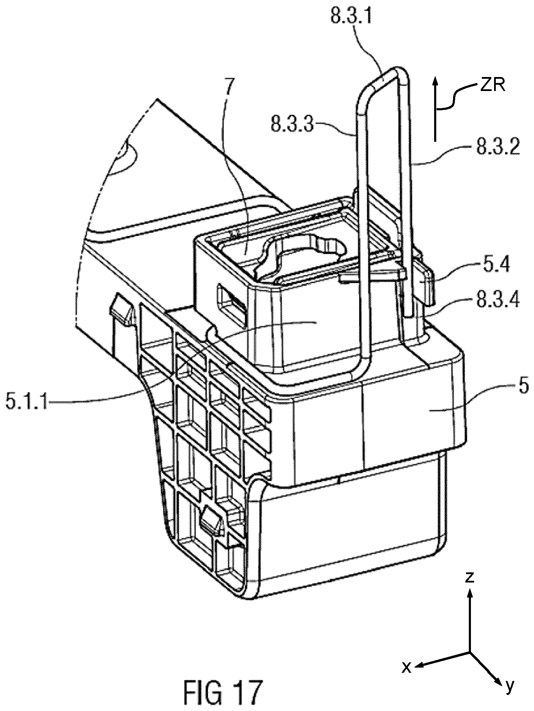

Die Figuren 15 bis 18B zeigen schematisch verschiedene Ansichten des am Grundtragelement 5 befestigten Verriegelungselements 8. Die Figur 15 zeigt die Montage des Verriegelungselements 8 am Grundtragelement 5. Im verriegelten Zustand der Kopfstütze 1 ist jeder der beiden Verriegelungsbereiche 8.2 jeweils in einer von zwei korrespondierenden Öffnungen 5.3, insbesondere schlitzförmigen Ausnehmungen, des Grundtragelements 5 angeordnet. Die Figur 16 zeigt das am Grundtragelement 5 montierte Verriegelungselement 8 in perspektivischer Ansicht. Die Figur 17 zeigt in vergrößerter Darstellung die Befestigung des Verriegelungselements 8 am Grundtragelement 5.

Ein freies Befestigungsende 8.3.4 des Verriegelungselements 8 ist formschlüssig und kraftschlüssig in einer Befestigungsnut 5.4 des Grundtragelements 5 fixiert und bildet einen Teilbereich des Befestigungsbereichs 8.1.

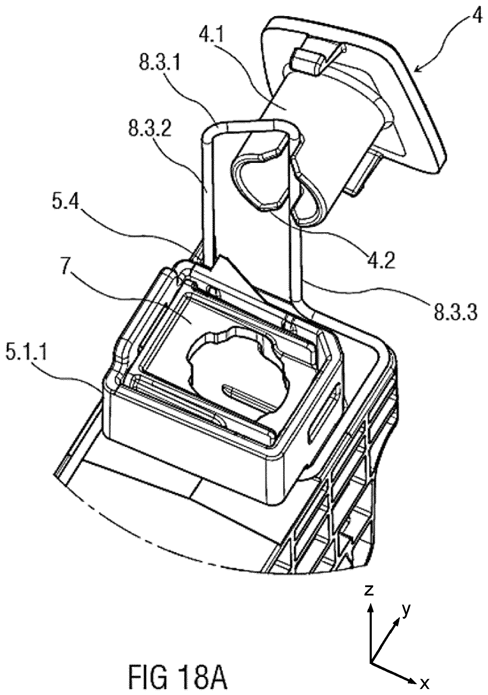

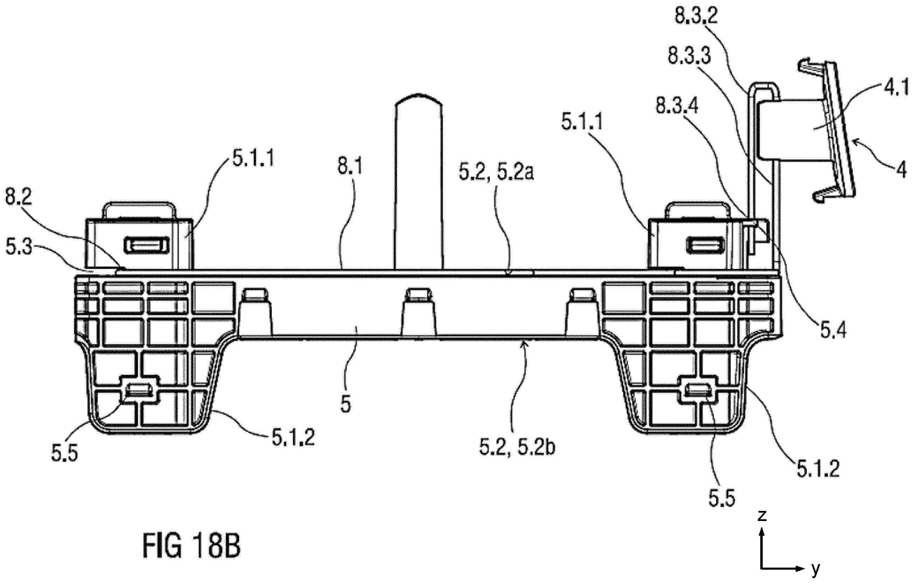

Die Figuren 18A und 18B zeigen das Betätigungselement 4 in seiner unbetätigten Stellung, das heißt in seiner Ausgangsstellung, in welcher das Betätigungselement 4 am Betätigungsbereich 8.3, insbesondere am Eingriffsbereich 8.3.3 anliegt, aber nicht im Betätigungseingriff ist. Das Betätigungselement 4 umfasst einen Kopplungsbereich 4.1, welcher mit dem Eingriffsbereich 8.3.3 gekoppelt ist. Der Kopplungsbereich 4.1 ist korrespondierend zum Eingriffsbereich 8.3.3 des Verriegelungselements 8.3 ausgebildet. Der Eingriffsbereich 8.3.3 ist drahtförmig ausgebildet. Der Kopplungsbereich 4.1 ist als eine Halteausnehmung 4.2, insbesondere ein Halteschlitz oder eine Haltenut, zur Aufnahme des Eingriffsbereichs 8.3.3 ausgebildet.

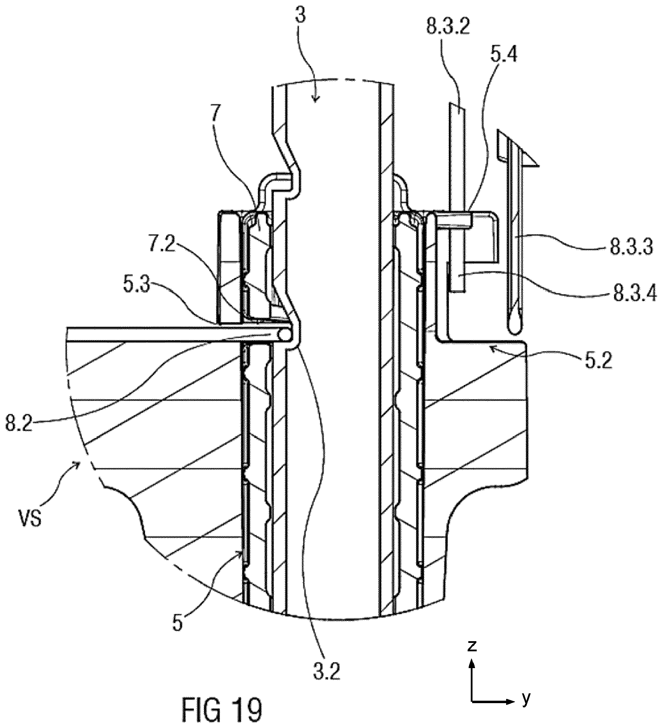

Die Figur 19 zeigt schematisch eine vergrößerte Ansicht eines teilweise geöffneten Grundtragelements 5 im Verriegelungsbereich 8.2 mit dem Verriegelungselement 8 in seiner verriegelten Stellung VS, in welcher der Kopfstützenkörper 2 am Tragelement 3 arretiert ist. In der verriegelten Stellung VS ist der Verriegelungsbereich 8.2 in einem formschlüssigen und kraftschlüssigen Eingriff mit dem Formschlussmittel und Kraftschlussmittel 3.2. Das Formschlussmittel und Kraftschlussmittel 3.2 ist beispielsweise als eine eingeschnittene Kerbe mit einem scharfen Absatz und einer abgeschrägten Fläche ausgeführt. Die abgeschrägte Fläche ermöglicht ein einfaches Einführen und Arretieren des Verriegelungsbereichs 8.2 in die Kerbe ohne ein Verkanten.

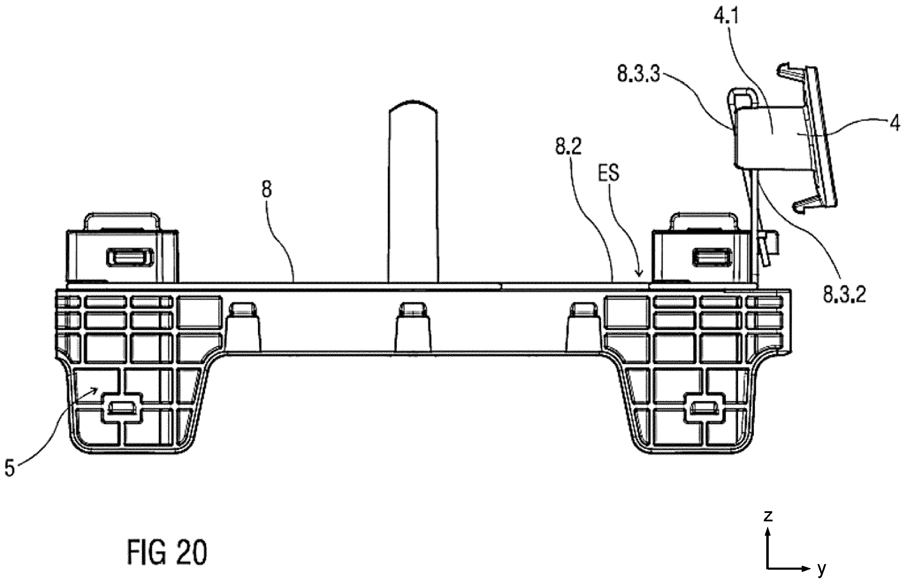

Die Figur 20 zeigt in schematischer Ansicht das Betätigungselement 4 in einem betätigten Zustand, das heißt in einem entriegelnden Zusammenwirken, insbesondere Eingriff, mit dem Verriegelungselement 8. Das Betätigungselement 4 drückt gegen den Eingriffsbereich 8.3.3, wodurch der Verriegelungsbereich 8.2 zwangsläufig aus seiner verriegelten Stellung VS in die entriegelte Stellung ES bewegt wird. Das Befestigungsende 8.3.4 ist in der Befestigungsnut 5.4 fixiert.

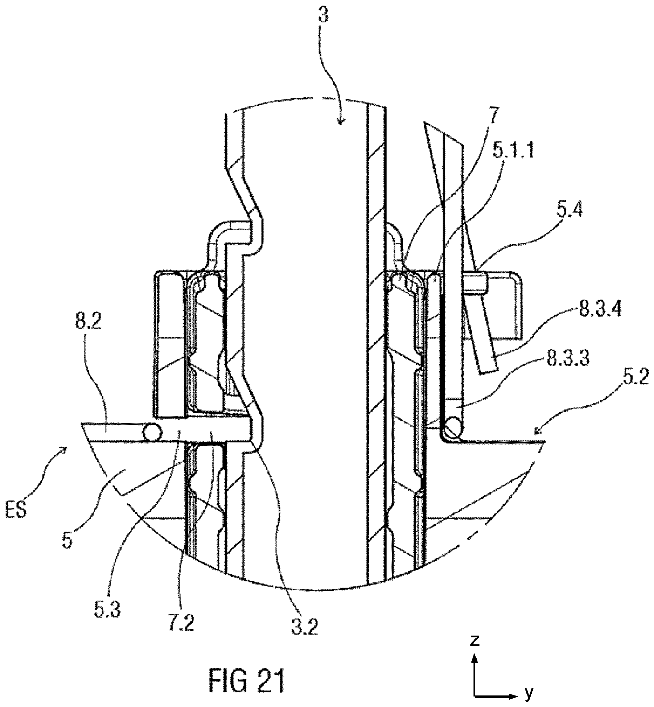

Die Figur 21 zeigt das Verriegelungselement 8 in seiner entriegelten Stellung ES. Die Betätigung des Betätigungselements 4 und demzufolge der Bewegung des Verriegelungselements 8 in die entriegelte Stellung ES wird begrenzt durch die Außenkontur des oberen Fortsatzes 5.1.1, an welche der Kopplungsbereich 4.1 des Betätigungselements 4 anschlägt.

In dieser entriegelten Stellung ES ist der Verriegelungsbereich 8.2 aus dem Formschlussmittel und Kraftschlussmittel 3.2, der Aussparung 7.2 und der schlitzförmigen Öffnung 5.3 herausbewegt und somit aus dem arretierten Eingriff am Tragelement 3 bewegt, so dass der Kopfstützenkörper 2 und die mit diesem fest verbundenen Komponenten, wie das Grundtragelement 5, das Lager 7, das Verriegelungselement 8, das Betätigungselement 4, relativ zum Tragelement 3 nach oben oder unten bewegbar sind und somit der Kopfstützenkörper 2 in eine der Höhenpositionen HP verstellbar ist.

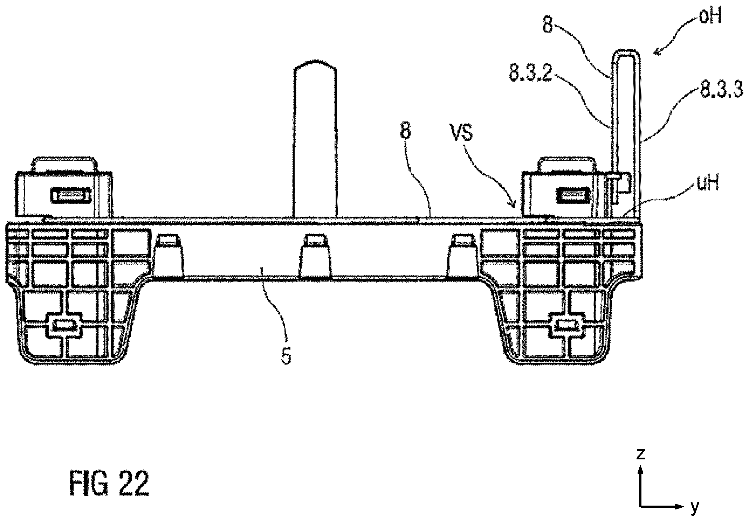

Die Figur 22 zeigt in schematischer Ansicht das Grundtragelement 5 mit dem befestigten Verriegelungselement 8 in der verriegelten Stellung VS ohne das Betätigungselement 4.

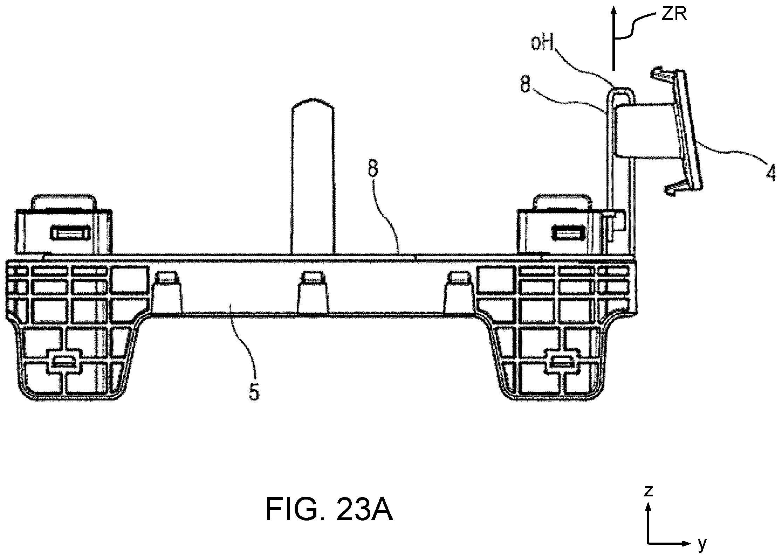

Die Figuren 23A bis 23C zeigen in schematischer Ansicht das Grundtragelement 5 mit befestigtem Verriegelungselement 8 und mit dem Betätigungselement 4 in verschiedenen möglichen Betätigungshöhen aufgrund verschiedener Montagepositionen des Betätigungselements 4 an verschiedenen Kopfstützenkörpern 2.

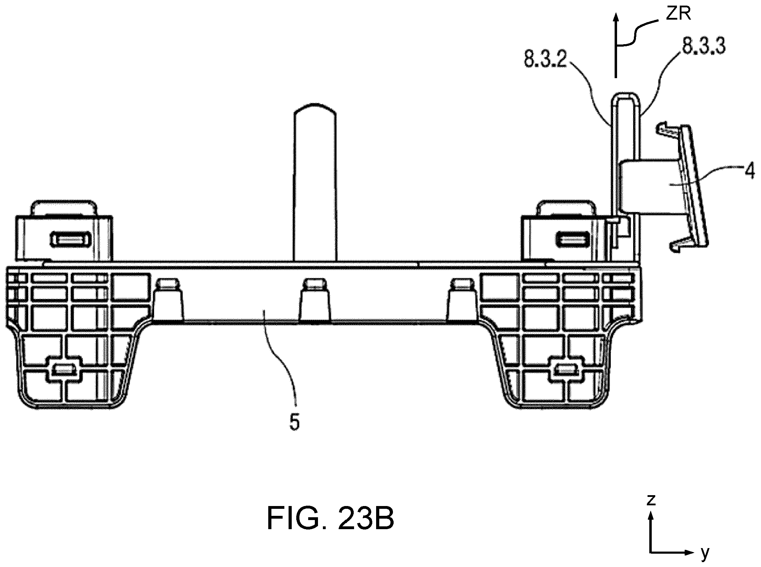

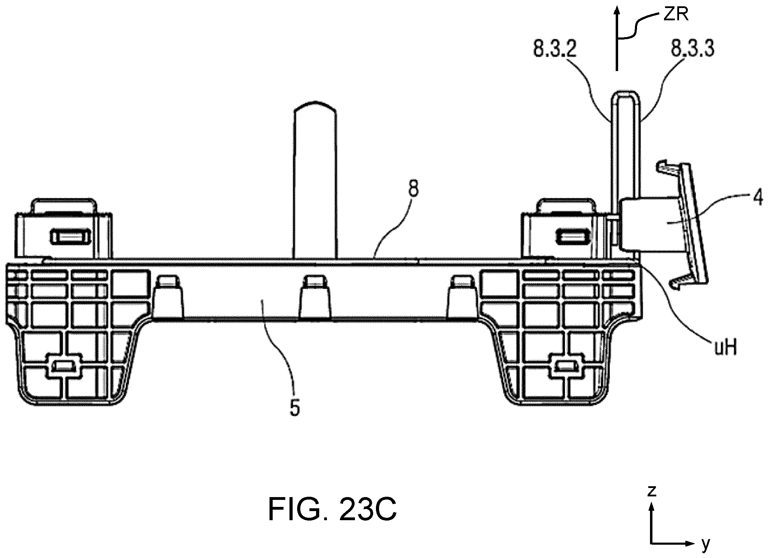

Die Figur 23A zeigt eine maximal obere Montageposition und Betätigungshöhe für das Betätigungselement 4. Diese maximal obere Montageposition und Betätigungshöhe wird begrenzt durch den oberen Höhenanschlag oH. Figur 23B zeigt eine mittlere Montageposition und Betätigungshöhe für das Betätigungselement 4. Die Figur 23C zeigt eine maximal untere Montageposition und Betätigungshöhe für das Betätigungselement 4. Dies maximal untere Montageposition und Betätigungshöhe wird begrenzt durch den unteren Höhenanschlag uH. Durch Vergleich der Figuren 23A bis 23C wird deutlich, dass das Verriegelungselement 8 als Gleichteil mit unterschiedlichen Kopfstützenkörpern 2 und sich daraus ergebenden unterschiedlichen Positionen des Betätigungselements 4 kombinierbar ist.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

### Bezugszeichenliste

- 1: Kopfstütze
- 2: Kopfstützenkörper
- 2.1: Schaumstoffkörper
- 2.2: Bezugselement
- 3: Tragelement
- 3.1: Stangenende
- 3.2: Formschlussmittel und Kraftschlussmittel
- 4: Betätigungselement
- 4.1: Kopplungsbereich
- 4.2: Halteausnehmung
- 5: Grundtragelement
- 5.1: Lageröffnung
- 5.1.1: Fortsatz
- 5.1.2: Fortsatz
- 5.2: Oberflächenseite
- 5.2a: obere Oberflächenseite
- 5.2b: untere Oberflächenseite
- 5.3: Öffnung
- 5.4: Befestigungsnut
- 5.5: korrespondierendes Befestigungsmittel
- 6: Halteelement
- 6.1: Ausnehmung
- 6.2: Aufnahme
- 6.3: Befestigungsmittel
- 7: Lager
- 7.1: Innengleitfläche
- 7.2: Aussparung
- 7.3: Befestigungselement
- 7.4: Längsöffnung
- 7.5: Rippe
- 7.5.1: innere Längsrippe
- 7.5.2: innere Querrippe
- 7.5.3: äußere Rippe
- 8: Verriegelungselement
- 8.1: Befestigungsbereich
- 8.2: Verriegelungsbereich
- 8.3: Betätigungsbereich
- 8.3.1: abragendes Ende
- 8.3.2: flexibler Bereich
- 8.3.3: Eingriffsbereich
- 8.3.4: Befestigungsende

- ES: entriegelte Stellung
- HP: Höhenposition
- HP1: untere Höhenposition
- HP2: obere Höhenposition
- oH: oberer Höhenanschlag
- uH: unterer Höhenanschlag
- S: Fahrzeugsitz
- VS: verriegelte Stellung
- x: Längsrichtung
- y: Querrichtung
- z: Vertikalrichtung
- ZR: Hochrichtung

## Patentansprüche

1. Kopfstütze (1) für einen Sitz, insbesondere Fahrzeugsitz, umfassend zumindest
- einen Kopfstützenkörper (2),
- ein Tragelement (3) mit zumindest einem Stangenende (3.1) zur Halterung des Kopfstützenkörpers (2),
- ein Grundtragelement (5) mit zumindest einer Lageröffnung (5.1), durch welche das Stangenende (3.1) hindurchgeführt ist, wobei das Grundtragelement (5) mit dem Kopfstützenkörper (2) verbunden ist und mit diesem relativ zum Tragelement (3) höhenverstellbar ist, und
- ein Verriegelungselement (8) zur Verriegelung des Grundtragelements (5) in einer eingestellten Höhenposition (HP) an dem Tragelement (3), wobei das Verriegelungselement (8) zumindest einen Verriegelungsbereich (8.2) und einen Betätigungsbereich (8.3) aufweist,
wobei
- der Verriegelungsbereich (8.2) sich im Wesentlichen senkrecht zu einer Querausdehnungsrichtung des Grundtragelements (5) erstreckt,
- der Verriegelungsbereich (8.2) in einer verriegelten Stellung (VS) an der Lageröffnung (5.1) lösbar arretiert ist,
**dadurch gekennzeichnet, dass**
- der Betätigungsbereich (8.3) sich vom Grundtragelement (5) in einer Hochrichtung (ZR) erstreckt, und
- durch Betätigung des Betätigungsbereichs (8.3) der Verriegelungsbereich (8.2) von der Lageröffnung (5.1) weg bewegbar ist.

2. Kopfstütze (1) nach Anspruch 1, wobei das Grundtrageelement (5) zwei voneinander beabstandete Lageröffnungen (5.1) umfasst und das Verriegelungselement (8) zwei mit den Lageröffnungen (5.1) korrespondierende Verriegelungsbereiche (8.2) aufweist.

3. Kopfstütze (1) nach Anspruch 1 oder 2, wobei das Verriegelungselement (8) aus einem Federdraht gebildet ist.

4. Kopfstütze (1) nach einem der Ansprüche 1 bis 3, wobei der zumindest eine Verriegelungsbereich (8.2) und der Betätigungsbereich (8.3) einteilig ausgebildet sind.

5. Kopfstütze (1) nach einem der Ansprüche 1 bis 4, wobei das Verriegelungselement (8) einteilig aus einem Federdraht gebogen ist.

6. Kopfstütze (1) nach einem der Ansprüche 1 bis 5, wobei der Betätigungsbereich (8.3) einen flexiblen Bereich (8.3.2), der durch Betätigung des Verriegelungselements (8) vorspannbar ist, und einen Eingriffsbereich (8.3.3) zur Betätigung des Verriegelungselements (8) aufweist.

7. Kopfstütze (1) nach Anspruch 6, wobei ein Ende (8.3.1) des Betätigungsbereichs (8.3) den flexiblen Bereich (8.3.2) und den Eingriffsbereich (8.3.3) miteinander verbindet.

8. Kopfstütze (1) nach Anspruch 6 oder 7, wobei der flexible Bereich (8.3.2) und der Eingriffsbereich (8.3.3) in einem unbetätigten Zustand des Betätigungselements (4) zueinander beabstandet sind und insbesondere weitgehend parallel zueinander verlaufen.

9. Kopfstütze (1) nach einem der Ansprüche 1 bis 8, wobei der zumindest eine Verriegelungsbereich (8.2) im Bereich der Lageröffnung (5.1) angeordnet ist.

10. Kopfstütze (1) nach einem der Ansprüche 1 bis 9, wobei das Grundtragelement (5) im Bereich der zumindest einen Lageröffnung (5.1) eine schlitzförmige Öffnung (5.3) aufweist, wobei der zumindest eine Verriegelungsbereich (8.2) in einem verriegelten Zustand des Grundtragelements (5) in der Öffnung (5.3) angeordnet ist und mit dem Tragelement (3) in einem arretierten Eingriff ist.

11. Kopfstütze (1) nach einem der Ansprüche 1 bis 10, wobei der Kopfstützenkörper (2) ein Betätigungselement (4) umfasst, welches mit dem Betätigungsbereich (8.3) des Verriegelungselements (8) gekoppelt ist.

12. Kopfstütze (1) nach Anspruch 11, wobei das Betätigungselement (4) derart an dem Betätigungsbereich (8.3) anliegt oder direkt oder indirekt mit dem Betätigungsbereich (8.3) derart wirkverbunden ist, dass zumindest in einer Richtung aus einer Bewegung des Betätigungselements (4) eine Bewegung des Betätigungsbereichs (8.3) resultiert.

13. Kopfstütze (1) nach einem der Ansprüche 1 bis 12, wobei das Grundtragelement (5) zumindest ein Lager (7) umfasst, welches in der Lageröffnung (5.1) des Grundtragelements (5) gehalten ist und mittels welcher der Kopfstützenkörper (2) relativ zu dem Tragelement (3) an diesem höhenverstellbar gelagert ist.

14. Kopfstütze (1) nach einem der Ansprüche 1 bis 13, wobei der Kopfstützenkörper (2) ein Halteelement (6) umfasst, welches an dem Grundtragelement (5) angeordnet ist und mit diesem relativ zum Tragelement (3) höhenverschieblich ist.

15. Sitz, insbesondere Fahrzeugsitz, mit zumindest einer Rückenlehne und einer an der Rückenlehne angeordneten Kopfstütze (1) nach einem der Ansprüche 1 bis 14.

## Claims

1. Headrest (1) for a seat, in particular vehicle seat, comprising at least
- one headrest body (2);
- one support element (3) having at least one rod end (3.1) for mounting the headrest body (2);
- one main support element (5) having at least one bearing opening (5.1) through which the rod end (3.1) is routed, wherein the main support element (5) is connected to the headrest body (2) and conjointly with the latter is height-adjustable relative to the support element (3); and
- one locking element (8) for locking the main support element (5) in an adjusted height position (HP) on the support element (3), wherein the locking element (8) has at least one locking region (8.2) and one activation region (8.3);
wherein
- the locking region (8.2) extends so as to be substantially perpendicular to a direction of transverse extent of the main support element (5);
- the locking region (8.2) in a locked position (VS) is releasably secured on the bearing opening (5.1),
**characterized in that**
- the activation region (8.3) extends from the main support element (5) in a height direction (ZR); and
- the locking region (8.2) by activating the activation region (8.3) is movable away from the bearing opening (5.1) .

2. Headrest (1) according to Claim 1, wherein the main support element (5) comprises two mutually spaced-apart bearing openings (5.1), and the locking element (8) has two locking regions (8.2) that correspond to the bearing openings (5.1).

3. Headrest (1) according to Claim 1 or 2, wherein the locking element (8) is formed from a spring wire.

4. Headrest (1) according to one of Claims 1 to 3, wherein the at least one locking region (8.2) and the activation region (8.3) are integrally configured.

5. Headrest (1) according to one of Claims 1 to 4, wherein the locking element (8) is integral and bent from a spring wire.

6. Headrest (1) according to one of Claims 1 to 5, wherein the activation region (8.3) has a flexible region (8.3.2), which is able to be pretensioned by activating the locking element (8), and an engagement region (8.3.3) for activating the locking element (8).

7. Headrest (1) according to Claim 6, wherein one end (8.3.1) of the activation region (8.3) connects the flexible region (8.3.2) and the engagement region (8.3.3) to one another.

8. Headrest (1) according to Claim 6 or 7, wherein the flexible region (8.3.2) and the engagement region (8.3.3) in a non-activated state of the activation element (4) are mutually spaced apart and in particular run so as to be largely mutually parallel.

9. Headrest (1) according to one of Claims 1 to 8, wherein the at least one locking region (8.2) is disposed in the region of the bearing opening (5.1).

10. Headrest (1) according to one of Claims 1 to 9, wherein the main support element (5) in the region of the at least one bearing opening (5.1) has a slot-shaped opening (5.3), wherein the at least one locking region (8.2) in a locked state of the main support element (5) is disposed in the opening (5.3) and is securely engaged with the support element (3).

11. Headrest (1) according to one of Claims 1 to 10, wherein the headrest body (2) comprises an activation element (4) which is coupled to the activation region (8.3) of the locking element (8).

12. Headrest (1) according to Claim 11, wherein the activation element (4) bears on the activation region (8.3), or is operatively connected directly or indirectly to the activation region (8.3), in such a manner that a movement of the activation region (8.3) results from a movement of the activation element (4) at least in one direction.

13. Headrest (1) according to one of Claims 1 to 12, wherein the main support element (5) comprises at least one bearing (7) which is held in the bearing opening (5.1) of the main support element (5) and by which the headrest body (2) is mounted on the support element (3) so as to be height-adjustable relative to the latter.

14. Headrest (1) according to one of Claims 1 to 13, wherein the headrest body (2) comprises a holding element (6) which is disposed on the main support element (5) and conjointly with the latter is displaceable in terms of height relative to the support element (3).

15. Seat, in particular vehicle seat, having at least one backrest and one headrest (1) according to one of Claims 1 to 14, said headrest (1) being disposed on the backrest.

## Revendications

1. Appui-tête (1) pour un siège, en particulier un siège de véhicule, comprenant au moins
- un corps (2) d'appui-tête,
- un élément de support (3) ayant au moins une extrémité de tige (3.1) pour maintenir le corps (2) d'appui-tête,
- un élément de support de base (5) ayant au moins une ouverture de palier (5.1) à travers laquelle passe l'extrémité de la tige (3.1), l'élément de support de base (5) étant relié au corps (2) de l'appui-tête et étant apte à être réglé en hauteur avec celui-ci par rapport à l'élément de support (3), et
- un élément de verrouillage (8) pour verrouiller l'élément de support de base (5) dans une position en hauteur réglée (HR) sur l'élément de support (3), l'élément de verrouillage (8) présentant au moins une zone de verrouillage (8.2) et une zone d'actionnement (8.3),
dans lequel
- la zone de verrouillage (8.2) s'étend sensiblement perpendiculairement à une direction d'extension transversale de l'élément de support de base (5),
- la zone de verrouillage (8.2) est bloquée de manière amovible dans une position verrouillée (VS) sur l'ouverture de palier (5.1),
**caractérisé en ce que**
- la zone d'actionnement (8.3) s'étend depuis l'élément de support de base (5) dans une direction vers le haut (ZR), et
- par l'actionnement de la zone d'actionnement (8.3), la zone de verrouillage (8.2) est apte à être éloignée de l'ouverture de palier (5.1).

2. Appui-tête (1) selon la revendication 1, dans lequel l'élément de support de base (5) comprend deux ouvertures de palier (5.1) espacées l'une de l'autre et l'élément de verrouillage (8) présente deux zones de verrouillage (8.2) correspondant aux ouvertures d'appui (5.1).

3. Appui-tête (1) selon la revendication 1 ou la revendication 2, dans lequel l'élément de verrouillage (8) est formé d'un fil à ressort.

4. Appui-tête (1) selon l'une des revendications 1 à 3, dans lequel l'au moins une zone de verrouillage (8.2) et la zone d'actionnement (8.3) sont formées d'une seule pièce.

5. Appui-tête (1) selon l'une des revendications 1 à 4, dans lequel l'élément de verrouillage (8) est plié d'une seule pièce à partir d'un fil à ressort.

6. Appui-tête (1) selon l'une des revendications 1 à 5, dans lequel la zone d'actionnement (8.3) comprend une zone flexible (8.3.2) qui est apte à être précontrainte par l'actionnement de l'élément de verrouillage (8) et une zone d'engagement (8.3.3) pour actionner l'élément de verrouillage (8).

7. Appui-tête (1) selon la revendication 6, dans lequel une extrémité (8.3.1) de la zone d'actionnement (8.3) relie la zone flexible (8.3.2) et la zone d'engagement (8.3.3) l'une à l'autre.

8. Appui-tête (1) selon la revendication 6 ou 7, dans lequel la zone flexible (8.3.2) et la zone d'engagement (8.3.3) sont espacées l'une de l'autre dans un état de non-actionnement de l'élément d'actionnement (4) et s'étendent en particulier largement parallèlement l'une à l'autre.

9. Appui-tête (1) selon l'une des revendications 1 à 8, dans lequel l'au moins une zone de verrouillage (8.2) est agencée dans la zone de l'ouverture de palier (5.1) .

10. Appui-tête (1) selon l'une des revendications 1 à 9, dans lequel l'élément de support de base (5) présente une ouverture (5.3) en forme de fente dans la zone de l'au moins une ouverture de palier (5.1), l'au moins zone de verrouillage (8.2) étant disposée dans l'ouverture (5.3) dans un état de verrouillage de l'élément de support de base (5) et étant en prise de verrouillage avec l'élément de support (3).

11. Appui-tête (1) selon l'une des revendications 1 à 10, dans lequel le corps (2) de l'appui-tête comprend un élément d'actionnement (4) qui est relié à la zone d'actionnement (8.3) de l'élément de verrouillage (8) .

12. Appui-tête (1) selon la revendication 11, dans lequel l'élément d'actionnement (4) repose contre la zone d'actionnement (8.3) ou est relié fonctionnellement directement ou indirectement à la zone d'actionnement (8.3) de telle sorte que, au moins dans une direction, un mouvement de la zone d'actionnement (8.3) résulte d'un mouvement de l'élément d'actionnement (4).

13. Appui-tête (1) selon l'une des revendications 1 à 12, dans lequel l'élément de support de base (5) comprend au moins un palier (7) qui est maintenu dans l'ouverture de palier (5.1) de l'élément de support de base (5) et au moyen duquel le corps (2) de l'appui-tête est monté sur l'élément de support (3) de manière à être apte à être réglé en hauteur par rapport à ce dernier.

14. Appui-tête (1) selon l'une des revendications 1 à 13, dans lequel le corps (2) d'appui-tête comprend un élément de retenue (6) qui est agencé sur l'élément de support de base (5) et qui est déplaçable en hauteur avec celui-ci par rapport à l'élément de support (3).

15. Siège, en particulier les sièges de véhicule, comprenant au moins un dossier et, agencé sur le dossier, un appui-tête (1) selon l'une quelconque des revendications 1 à 14.
